# EUROPÄISCHE PATENTSCHRIFT

(11) **EP 4 328 154 B1**
(45) Veröffentlichungstag und Bekanntmachung des Hinweises auf die Patenterteilung: **29.01.2025**
(21) Anmeldenummer: 23198659.7
(22) Anmeldetag: 17.10.2019
(51) Int. Cl.: B65G 1/04

(54) **LAGERSYSTEM ZUM LAGERN VON BEHÄLTERN**
STORAGE SYSTEM FOR STORING CONTAINERS
SYSTÈME DE STOCKAGE PERMETTANT DE STOCKER DES RÉCIPIENTS

(30) Priorität: 06.11.2018 DE 102018218906
(43) Veröffentlichungstag der Anmeldung: 28.02.2024
(62) Teilanmeldung aus: 19203903.0
(73) Patentinhaber: Gebhardt Fördertechnik GmbH, 74889 Sinsheim (DE)
(72) Erfinder: Gebhardt, Marco, 74889 Sinsheim (DE); Eder, Jörg, 67661 Kaiserslautern (DE)
(74) Vertreter: Ullrich & Naumann PartG mbB

(56) Entgegenhaltungen:
- WO-A1-2014/075937
- WO-A1-2016/198467
- WO-A1-2018/069282
- WO-A1-2019/001816
- WO-A1-2019/141877
- DE-A1- 2 138 120

## Beschreibung

Die Erfindung betrifft ein Lagersystem zum Lagern von Behältern, mit einer Gitterstruktur mit einer Vielzahl von Gitterzellen, wobei jede Gitterzelle eine Lagersäule einer unterhalb der Gitterstruktur angeordneten Behälter-Lagerstruktur definiert, wobei die Lagersäulen eingerichtet sind, jeweils einen vertikalen Stapel von Lagerbehältern aufzunehmen, und mit mindestens einem zur Fortbewegung auf der Gitterstruktur ausgebildeten Transportroboter zur Handhabung der Lagerbehälter, wobei der Transportroboter Mittel zum Aufnehmen, Transportieren und Absetzen von in der Behälter-Lagerstruktur gelagerten Lagerbehältern umfasst.

Lagersysteme der in Rede stehenden Art sind seit Jahren aus der Praxis bekannt. Generell handelt es sich bei derartigen Lagersysteme um dreidimensional strukturierte Warenlager, in der sich bis zu einer bestimmten Höhe übereinander gestapelte Lagerplätze für kistenförmige Behälter (in der einschlägigen englischsprachigen Literatur üblicherweise als "bins" bezeichnet) befinden. Die Lagerstruktur wird dabei durch ein üblicherweise in Leichtbauweise gefertigtes Gerüst definiert, dessen oberer Abschluss durch ein gitterförmiges Schienensystem gebildet wird. Durch die Gerüststreben sind in einer Längsrichtung und in einer Querrichtung benachbart zueinander angeordnete Lagersäulen gebildet, in denen die Lagerbehälter vertikal übereinandergestapelt werden können.

Eine Anzahl von Transportrobotern ist auf den oberen Schienen angeordnet und kann sich horizontal auf der Gitterstruktur bewegen. Jeder Transportroboter ist mit einem Lift zum Aufnehmen, Transportieren und Platzieren von Lagerbehältern ausgestattet, die in der Behälter-Lagerstruktur gelagert sind.

Die in Rede stehenden Lagersysteme umfassen zudem einen oder üblicherweise mehrere Arbeitsplätze, die als Kommissionier- und/oder Beladestationen ausgebildet sind und von denen aus das jeweilige Lagersystem bedient werden kann. Die Arbeitsplätze sind im Allgemeinen auf Bodenniveau (entsprechend einer untersten Ebene der Behälter-Lagerstruktur) seitlich an das Lagersystem angegliedert.

Wenn ein in einem bestimmten Lagerbehälter gelagerter Produktartikel aus der Behälter-Lagerstruktur entnommen werden soll, z.B. zur Kommissionierung, wird ein Transportroboter so gesteuert, dass er den jeweiligen Lagerbehälter aus der Behälter-Lagerstruktur aufnimmt und den Lagerbehälter auf der Gitterstruktur zu einer Gitterzelle transportiert, welche mit einem Arbeitsplatz über eine nicht mit Lagerbehältern belegte, d.h. freie, Lagersäule kommuniziert. Dort wird der Lagerbehälter mittels des Lifts des Transportroboters durch die freie Lagersäule hinab zu dem Arbeitsplatz befördert, wo sodann der benötigte Produktartikel aus dem Lagerbehälter entnommen werden kann.

Bei einem in die Behälter-Lagerstruktur einzulagernden Lagerbehälter läuft der beschriebene Prozess umgekehrt ab.

In beiden Fällen, d.h. sowohl bei der Auslagerung als auch bei der Einlagerung, erweist es sich als nachteilig, dass der vertikale Transport der Lagerbehälter mittels der Lifte der Transportroboter zwischen Arbeitsplatz und Gitterstruktur relativ zeitintensiv ist. Die Zeit, die ein Transportroboter für den Hub eines Behälters benötigt, ist insofern verschwendet, als dass ein Transportroboter erst nach Beendigung des Hubvorgangs mit einem nächsten Auftrag beginnen kann und ein Kommissionierer an einem Arbeitsplatz auf den jeweiligen nächsten Behälter warten muss. Dies steht einer effizienten und leistungsstarken Lagerbedienung entgegen.

Speziell bei der Auslagerung besteht das zusätzliche Problem, dass die Lagerbehälter zu Kommissionierungszwecken im Allgemeinen in einer bestimmten Reihenfolge an den jeweiligen Arbeitsplätzen ankommen müssen. Um dies zu erreichen, kann die vorgegebene Reihenfolge bereits im Lager gebildet werden, indem die Transportroboter entsprechend gesteuert werden. Allerdings sind mit einer derartigen Steuerung Wartezeiten für die Transportroboter verknüpft, was sich wiederum nachteilig auf die erzielbare Leistung auswirkt.

Alternativ zu einer Erzeugung einer spezifischen Sequenz von Lagerbehältern direkt im Lager selbst, sind bereits Lagersysteme vorgeschlagen worden, bei denen zwischen dem eigentlichen Lager und den Arbeitsplätzen spezielle Puffereinrichtungen in Gestalt von sog. Sequenzertürmen zum Einsatz kommen. In derartigen Systemen können Transportroboter angeforderte Lagerbehälter in einer weitestgehend beliebigen Reihenfolge absenken. Ein abgesenkter Lagerbehälter gelangt dabei jedoch nicht direkt zu den Arbeitsplätzen, sondern wird über Fördereinrichtungen zunächst einem Sequenzerturm zugeführt. Der Sequenzerturm umfasst eine Hebeanordnung sowie eine Anzahl von Pufferplätzen zur temporären Zwischenlagerung von Lagerbehältern. Eine entsprechende Steuerung der Zwischenlagerung ermöglicht eine Ausgabe von Lagerbehältern aus dem Sequenzerturm an die Arbeitsplätze entsprechend der zur Abarbeitung der jeweiligen Kommissionierungsaufträge notwendigen Reihenfolge. Nachteilig bei dieser Art von Sequenzierung sind neben den hohen Kosten insbesondere der Platzbedarf für die Sequenzertürme. Zudem sind die Systeme in baulicher Hinsicht aufwendig.

Das Dokument WO 2014/075937 A1 offenbart ein Lagersystem nach dem Oberbegriff des Anspruchs 1.

Der vorliegenden Erfindung liegt die Aufgabe zugrunde, ein Lagersystem der eingangs genannten Art derart auszugestalten und weiterzubilden, dass mit in konstruktiver Hinsicht möglichst einfachen Mitteln eine effiziente Sequenzbildung für auszulagernde Lagerbehälter bei gleichzeitig hoher Leistung der Transportroboter ermöglicht ist.

Erfindungsgemäß wird die voranstehende Aufgabe durch die Merkmale des Anspruchs 1 gelöst.

In erfindungsgemäßer Weise ist zunächst erkannt worden, dass die Transportroboter unter Leistungsgesichtspunkten für einen Vertikaltransport der Lagerbehälter ungeeignet sind, da zum einen die Lifte konstruktionsbedingt relativ langsam arbeiten und zum anderen die Transportroboter während der Dauer der Vertikaltransporte für ihre eigentlichen Aufgaben nicht zur Verfügung stehen. Erfindungsgemäß wird daher der Einsatz einer Lagerbehälter-Hebevorrichtung mit einem Lastaufnahmemittel in Gestalt einer heb- und senkbaren Hubplattform zur Aufnahme von Lagerbehältern vorgeschlagen, die eigens für die Bewerkstelligung der Vertikaltransporte von Lagerbehältern vorgesehen ist, so dass insoweit Abhängigkeiten beseitigt und eine Entkopplung von den Transportrobotern stattfindet. Ein Gitterplatz ist somit effektiver nutzbar, da er nicht so lange von ein und demselben Transportroboter blockiert wird. Wenn der Transportroboter bzw. dann auch der Lagerbehälter schneller ausgetauscht werden kann, kann der Durchsatz entsprechend gesteigert werden.

In weiter erfindungsgemäßer Weise ist vorgesehen, dass auf einer oder vorzugsweise mehreren Ebenen der Behälter-Lagerstruktur Pufferplätze zur Zwischenlagerung von Lagerbehältern ausgebildet sind, wobei die Pufferplätze erfindungsgemäß an die Lagerbehälter-Hebevorrichtung angrenzend ausgebildet sind, so dass eine Übergabe von Lagerbehältern von der Hub-Plattform der Lagerbehälter-Hebevorrichtung auf die Pufferplätze und umgekehrt ermöglicht ist. Im Hinblick auf eine Maximierung der Pufferkapazität ist bevorzugt jede Ebene der Behälter-Lagerstruktur als eine solche Puffer-Ebene mit jeweiligen an die Lagerbehälter-Hebevorrichtung ankoppelnden Pufferplätzen ausgebildet.

Durch die Ausbildung einer Anzahl von übereinander angeordneter Pufferplätzen direkt an der Lagerbehälter-Hebevorrichtung und aufgrund der damit verbundenen Möglichkeit der Zwischenlagerung kann die Lagerbehälter-Hebevorrichtung - ohne weitere bauliche Maßnahmen und damit in kostengünstiger und platzsparender Weise - die Funktion der Sequenzierung übernehmen. Mit anderen Worten wird die geforderte Sequenzierung durch die Lagerbehälter-Hebevorrichtung mittels entsprechender Zwischenlagerung realisiert, so dass die Sequenzierung weitestgehend von den Transportrobotern entkoppelt ist. Dementsprechend können die Transportroboter unabhängig von der jeweils konkret geforderten Sequenz und damit flexibler und schneller arbeiten. Im Ergebnis ist somit eine effiziente Sequenzbildung für auszulagernde Lagerbehälter bei gleichzeitig hoher Leistung der Transportroboter ermöglicht.

Im Hinblick auf einen reibungslosen Transfer von Lagerbehältern von der Hubplattform der Lagerbehälter-Hebevorrichtung auf die Pufferplätze sowie umgekehrt von den Pufferplätzen auf die Hubplattform der Lagerbehälter-Hebevorrichtung ist gemäß einer nicht erfindungsgemäßen Ausführungsform eine Ausgestaltung der Pufferplätze als aktive Pufferplätze vorgesehen, wobei die Pufferplätze jeweils eine andienende Fördereinrichtung aufweisen. Diese Fördereinrichtung, die vorzugsweise umkehrbar bzw. reversibel einstellbare Förderrichtungen aufweist, kann bspw. als eine angetriebene Rollenbahn ausgeführt sein.

Erfindunngsgemäß eine passive Ausgestaltung der Pufferplätze vorgesehen, indem in den jeweiligen Pufferplatz-Ebenen lediglich eine Abstellfläche für die zwischenzulagernden Lagerbehälter bereitgestellt wird, insbesondere in Gestalt von Böden, die bspw. als Bleche ausgeführt sein könnten. Eine Übergabe von Lagerbehältern von der bzw. an die Lagerbehälter-Hebevorrichtung erfolgt hierbei mittels einer der Lagerbehälter-Hebevorrichtung zugeordneten, auf der jeweiligen Hubplattform der Lagerbehälter-Hebevorrichtung angeordneten Greifer-Einrichtung für die Lagerbehälter.

Gemäß einer vorteilhaften Ausgestaltung sind die Pufferplätze auf zwei einander gegenüberliegenden Seiten der Lagerbehälter-Hebevorrichtung angeordnet, wodurch sich ein besonders flexibler Betrieb realisieren lässt. So kann bspw. im Rahmen einer Abwärtsfahrt der Lagerbehälter-Hebevorrichtung auf ein und derselben Pufferplatz-Ebene einerseits ein Lagerbehälter auf einen Pufferplatz auf einer Seite der Lagerbehälter-Hebevorrichtung übergeben werden und andererseits - Zug um Zug und ohne ein Umsetzen der Lagerbehälter-Hebevorrichtung - ein Lagerbehälter von dem Pufferplatz auf der anderen Seite der Lagerbehälter-Hebevorrichtung aufgenommen werden.

Zur bestmöglichen Ausnutzung dieses Effekts kann generell vorgesehen sein, dass die Pufferplätze auf der einen Seite der Lagerbehälter-Hebevorrichtung zur Zwischenlagerung von in die Behälter-Lagerstruktur einzulagernden Lagerbehältern ausgeführt sind, während die Pufferplätze auf der anderen Seite der Lagerbehälter-Hebevorrichtung zur Zwischenlagerung von aus der Behälter-Lagerstruktur auszulagernden Lagerbehältern ausgeführt sind. Je nach den Anforderungen an ein System, insbesondere, wenn zusätzlich kein schienengebundenes Shuttle auf die Pufferplätze zugreifen kann, ist es auch denkbar, dass alle Pufferplätze nur der sequenzierten Auslagerung dienen und einzulagernde Behälter sofort den Transportrobotern auf der Gitterstruktur zur Verfügung gestellt werden. Im Rahmen weiterer Ausführungsformen können auch Zwischenlösungen denkbar sein, bei denen bspw. 20% der Pufferplätze für die Einlagerung und 80% der Pufferplätze für die Auslagerung vorgesehen sind.

Durch die Vorkehrung von an die Lagerbehälter-Hebevorrichtung ankoppelnden Pufferplätzen entsteht bei einer Integration der Lagerbehälter-Hebevorrichtung in die Behälter-Lagerstruktur, d.h. bei einer Anordnung der Lagerbehälter-Hebevorrichtung in einem Innenbereich der Behälter-Lagerstruktur, zwangsweis ein Verlust an Lagerkapazität. Im Hinblick auf eine Minimierung dieses Verlustes kann vorgesehen sein, dass die Pufferplätze nur auf einer Seite der Lagerbehälter-Hebevorrichtung angeordnet sind. Im Rahmen einer solchen Ausführung ließ sich eine Effizienzsteigerung dadurch erzielen, dass die Pufferplätze von Puffer-Ebene zu Puffer-Ebene alternierend entweder zur Zwischenlagerung von in die Behälter-Lagerstruktur einzulagernden Lagerbehältern oder zur Zwischenlagerung von aus der Behälter-Lagerstruktur auszulagernden Lagerbehältern ausgeführt sind.

Nach einer Ausführungsform kann mindestens eine Puffer-Ebene einen Pufferplatz aufweisen, der einen mit einer Gitterzelle der Gitterstruktur korrespondierenden und von der Gitterstruktur aus frei zugänglichen Pufferbereich aufweist. Diese Ausgestaltung ermöglicht den Transportrobotern einen direkten Zugriff auf den jeweiligen Pufferbereich, sodass ein angeforderter Lagerbehälter von einem Transportroboter direkt, d.h. ohne Umweg über die Lagerbehälter-Hebevorrichtung, dort abgestellt werden kann oder von dort aufgenommen werden kann.

Nach einer weiteren Ausführungsform kann die Behälter-Lagerstruktur eine dedizierte Übergabe-Ebene zur Übergabe von Lagerbehältern von der Behälter-Lagerstruktur bzw. den Transportrobotern an die Lagerbehälter-Hebevorrichtung sowie von der Lagerbehälter-Hebevorrichtung an die Behälter-Lagerstruktur bzw. die Transportroboter aufweisen. Üblicherweise wird es sich bei der Übergabe-Ebene um die oberste Lagerebene der Behälter-Lagerstruktur handeln, von wo aus die Transportroboter die Lagerbehälter besonders einfach und schnell übernehmen können. Es sind jedoch auch andere Übergabe-Ebenen denkbar. In jedem Fall dient die Lagerbehälter-Hebevorrichtung als Schnittstelle, welche die Übergabe-Ebene mit den Puffer-Ebenen und einer Arbeitsplatz-Ebene, die einen oder mehrere (bspw. als Beladestation und/oder als Kommissionierstation) ausgeführte Arbeitsplätze aufweisen kann, verbindet.

Im Hinblick auf eine besonders einfache und schnelle Montage können die Lagerbehälter-Hebevorrichtung und die Pufferplätze als bauliche Einheit ausgeführt sind. Insbesondere eine Nachrüstung im Sinne eines Anbaus an eine bereits existierende Behälter-Lagerstruktur ließe sich so mit verhältnismäßig geringem Aufwand realisieren.

Gemäß einer vorteilhaften Ausgestaltung kann die Lagerbehälter-Hebevorrichtung inklusive der Pufferplätze an einer Außenseite der Behälter-Lagerstruktur angeordnet sein. Eine derartige Ausgestaltung bietet den Vorteil, dass die Transportroboter auf der Gitterstruktur ungestört operieren können, d.h. nahezu sämtliche Gitterzellen ohne Umwege ansteuern können. Im Rahmen einer derartigen Ausgestaltung lassen sich zudem Arbeitsplätze in besonders einfacher Weise integrieren, nämlich auf Bodenniveau unmittelbar an eine Außenseite der Behälter-Lagerstruktur angegliedert.

Gemäß einer alternativen Ausgestaltung kann die Lagerbehälter-Hebevorrichtung inklusive der Pufferplätze auch im Inneren der Behälter-Lagerstruktur angeordnet sein. Dies geht zwar zu Lasten der zur Verfügung stehenden Lagerkapazität, da im Inneren der Behälter-Lagerstruktur Lagerplätze verloren gehen, hat allerdings den Vorteil, dass die Lagerbehälter-Hebevorrichtung von allen Gitterzellen aus ohne längere Fahrstrecken für die Transportroboter gut zu erreichen ist. Zudem könnte die Lagerbehälter-Hebevorrichtung von den Transportrobotern von mehreren Seiten aus angefahren werden.

In Bezug auf die Positionierung von Arbeitsplätzen kann bei einer derartigen Ausgestaltung vorgesehen sein, dass sich diese unterhalb eines Podests oder einer Zwischendecke befinden, auf dem/der die Behälter-Lagerstruktur aufgebaut ist. In dem Podest oder der Zwischendecke müssten entsprechende Durchgänge für die Lagerbehälter-Hebevorrichtung vorgesehen werden. Denkbar wäre auch, dass sich die Arbeitsplätze in einem innerhalb der Behälter-Lagerstruktur ausgebildeten Tunnel befinden, wobei die Lagerbehälter-Hebevorrichtungen als Schnittstellen zwischen den Tunnel-Arbeitsplätzen und der Gitterstruktur fungieren.

Gemäß einer bevorzugten Ausführungsform kann das Lagersystem zusätzlich zu der Behälter-Lagerstruktur ein Regallager umfassen, welches mittels einzelnen Transporteinheiten mit Lastaufnahmemitteln, sog. Shuttles, bedient wird. Dabei können die Pufferplätze zur Übergabe von Lagerbehältern an die Shuttles und/oder zur Übernahme von Lagerbehältern von den Shuttles ausgeführt sein. Die Zwischenspeicherung von Lagerbehältern könnte dementsprechend nicht nur auf den an die Lagerbehälter-Hebevorrichtung ankoppelnden Pufferplätzen erfolgen, sondern könnte auf das gesamte Regallager erweitert werden. Bei den Shuttles können sowohl OLS-Systeme (One-Level-Shuttles) zum Einsatz kommen, die jeweils nur eine einzige Regalebene bedienen, als auch MLS-Systemen (Multi-Level-Shuttles), die mithilfe einer Hubvorrichtung mehrere Regalebenen bedienen können.

Im Hinblick auf eine besonders platzsparende Ausgestaltung kann vorgesehen sein, dass die an die Lagerbehälter-Hebevorrichtung ankoppelnden Pufferplätze in eine Regalreihe des Regallagers integriert sind.

Im Hinblick auf einen besonders hohen Effizienzgrad kann vorgesehen sein, dass die Hub-Plattform einer Lagerbehälter-Hebevorrichtung eine erste Fördereinrichtung und eine zweite Fördereinrichtung aufweist, wobei für die erste und die zweite Fördereinrichtung gegenläufige Förderrichtungen einstellbar sind, derart, dass eine der Fördereinrichtungen zur Aufnahme und die jeweilige andere der Fördereinrichtungen zur Abgabe von Lagerbehältern eingerichtet ist. Damit ließen sich mit der Lagerbehälter-Hebevorrichtung "Doppelspiele" fahren, wonach bspw. auf Arbeitsplatzebene ein auszulagernder Lagerbehälter von der ersten Fördereinrichtung der Lagerbehälter-Hebevorrichtung ausgegeben wird, während gleichzeitig ein einzulagernder Lagerbehälter von der zweiten Fördereinrichtung der Lagerbehälter-Hebevorrichtung aufgenommen wird. Nach einem Hubvorgang auf die Ebene der Gitterstruktur könnte der einzulagernder Lagerbehälter von der zweiten Fördereinrichtung der Lagerbehälter-Hebevorrichtung ausgegeben und gleichzeitig wieder ein auszulagernder Lagerbehälter von der ersten Fördereinrichtung der Lagerbehälter-Hebevorrichtung aufgenommen werden. Ähnliche Vorgänge ließen sich auf den jeweiligen Puffer-Ebenen realisieren.

In einer vorteilhaften Ausgestaltung sind die erste Fördereinrichtung und die zweite Fördereinrichtung derart ausgeführt, dass sie jeweils Platz für zwei oder mehrere in Förderrichtung hintereinander angeordnete Lagerbehälter bieten. Hierdurch wäre ein flexibler Betrieb ermöglicht, der den jeweils aktuellen Leistungsanforderungen angepasst werden kann.

Grundsätzlich baut eine Lagerbehälter-Hebevorrichtung umso größer, je mehr Lagerbehälter von der Lagerbehälter-Hebevorrichtung aufgenommen und pro Hub befördert werden können. Entsprechend der Baugröße der Lagerbehälter-Hebevorrichtung gehen innerhalb der Behälter-Lagerstruktur Lagerplatz verloren. Dem kann in vorteilhafter Weise mittels einer Ausgestaltung entgegengewirkt werden, bei der die Hub-Plattform doppelstöckig ausgeführt ist. Im Konkreten könnte die Hub-Plattform eine untere Ebene aufweisen, der bspw. die erste Fördereinrichtung zugeordnet ist, sowie eine obere Ebene, welcher die zweite Fördereinrichtung zugeordnet ist. Dementsprechend könnten bspw. in einer Halteposition der Lagerbehälter-Hebevorrichtung über die untere Ebene der Hub-Plattform Lagerbehälter von einem Pufferplatz übernommen und über die obere Ebene der Hub-Plattform Lagerbehälter an einen Pufferplatz abgegeben werden.

Wie oben bereits erwähnt könnte die mindestens eine Übergabe-Ebene, auf der eine Übergabe von Lagerbehältern von der Behälter-Lagerstruktur bzw. den Transportrobotern an die Lagerbehälter-Hebevorrichtung sowie von der Lagerbehälter-Hebevorrichtung an die Behälter-Lagerstruktur bzw. die Transportroboter stattfindet, unmittelbar unterhalb der Gitterstruktur angeordnet sein, d.h. in einer Ebene entsprechend der obersten Lagerebene der Behälter-Lagerstruktur. Die Hubwege für die Lifte der Transportroboter zur Aufnahme bzw. Abgabe von Lagerbehältern sind somit minimiert, so dass Übergaben besonders schnell realisiert werden können.

Im Rahmen einer alternativen Ausgestaltung könnte eine Übergabe-Ebene auch in einer tiefer liegenden Ebene als die oberste Lagerebene der Lagerstruktur angeordnet sein. Durch eine derartige tiefere Position der Übergabe-Ebene, durch die zwar Pufferplatz-Ebenen verloren gehen, bietet sich die bauliche Möglichkeit, die Lagerbehälter-Hebevorrichtung derart auszuführen, dass der Heberkopf bzw. der obere Abschluss der Lagerbehälter-Hebevorrichtung unterhalb der Gitterstruktur liegt. Mit anderen Worten liegt die Lagerbehälter-Hebevorrichtung vollständig unterhalb der Gitterstruktur und ragt nicht über diese hinaus. Dementsprechend steht den Transportrobotern die gesamte Gitterstruktur als Arbeitsfläche zur Verfügung. Dieser Vorteil der freien Beweglichkeit der Transportroboter ist geeignet, die durch die tiefere Position der Übergabe-Ebene bedingten längeren Hubwege der Lifte der Transportroboter zur Aufnahme bzw. Abgabe von Lagerbehältern zu kompensieren oder unter bestimmten Betriebsbedingungen sogar zu überkompensieren.

Im Hinblick auf eine Minimierung von Lagerplatzverlusten kann eine doppelstöckig ausgeführte Übergabe-Ebene vorgesehen sein. Dies bedeutet, dass die Übergabe-Ebene eine untere Ebene und eine obere Ebene aufweist, wobei eine der Ebenen zur Übergabe von Lagerbehältern von der Behälter-Lagerstruktur bzw. den Transportrobotern an die Lagerbehälter-Hebevorrichtung und die jeweils andere der Ebenen zur Übergabe von Lagerbehältern von der Lagerbehälter-Hebevorrichtung an die Behälter-Lagerstruktur bzw. die Transportroboter eingerichtet sind. Durch die doppelstöckige Anordnung ist es möglich, Einlagerungen und Auslagerungen auf ein und derselben Seite einer Lagerbehälter-Hebevorrichtung abzuwickeln. Dies geschieht ohne nennenswerten Leistungsverlust gegenüber einer entsprechenden Anordnung, bei der Einlagerungen und Auslagerungen auf einander gegenüberliegenden Seiten einer Lagerbehälter-Hebevorrichtung abgewickelt werden, allerdings mit dem Vorteil, dass nur einseitig Lagerplätze geopfert werden müssen.

Zur Realisierung einer effektiven, flexiblen und reibungslosen Übergabe von Lagerbehältern, sowohl von der Lagerbehälter-Hebevorrichtung an die Behälter-Lagerstruktur als auch umgekehrt von der Behälter-Lagerstruktur an die Lagerbehälter-Hebevorrichtung, sind in vorteilhafter Weise auf den jeweiligen Übergabe-Ebenen andienende Fördereinrichtungen vorgesehen. Diese Fördereinrichtungen können jeweils eine fest vorgegebene Förderrichtung haben, sodass eine Fördereinrichtung entweder zu der entsprechenden Lagerbehälter-Hebevorrichtung hin fördert oder von der entsprechenden Lagerbehälter-Hebevorrichtung weg fördert. Im Hinblick auf ein hohes Maß an Flexibilität können die Fördereinrichtung auch umkehrbar einstellbare Förderrichtungen aufweisen. Transportroboter können Lagerbehälter auf den jeweiligen Fördereinrichtungen abstellen (zum Abtransport durch die Lagerbehälter-Hebevorrichtung) oder Lagerbehälter von den jeweiligen Fördereinrichtungen aufnehmen (nach deren Anlieferung durch die Lagerbehälter-Hebevorrichtung).

In einer vorteilhaften Ausführungsform können die andienende Fördereinrichtungen, auf Kosten der Lagerkapazität, beidseits der Lagerbehälter-Hebevorrichtung vorgesehen sein, um so bei Bedarf eine höhere Leistung zu erzielen. Konkret könnten bspw. insgesamt vier andienende Fördereinrichtungen vorgesehen sein, die paarweise auf jeweils gegenüberliegenden Seiten der Lagerbehälter-Hebevorrichtung angeordnet sind. Zur Vereinfachung der Übergabe von Lagerbehältern kann vorgesehen sein, dass andienenden Fördereinrichtungen, die jeweils auf derselben Seite einer Lagerbehälter-Hebevorrichtung angeordnet sind, über eine zusätzliche quer verlaufende Fördereinrichtung miteinander in Verbindung stehen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer perspektivischen Schnittdarstellung ein Lagersystem mit einer Lagerbehälter-Hebevorrichtung mit beidseitig ausgebildeten Pufferplätzen gemäß einem nicht erfindungsgemäßen Ausführungsbeispiel,
- Fig. 2: in einer geschnittenen Seitenansicht das Lagersystem gemäß Fig. 1,
- Fig. 3: in einer schematischen Draufsicht das Lagersystem gemäß den Fig. 1 und 2,
- Fig. 4: in einer schematischen Draufsicht ein Lagersystem mit einer Lagerbehälter-Hebevorrichtung mit beidseitig ausgebildeten Pufferplätzen und einem zusätzlichen Regallager gemäß einem Ausführungsbeispiel der Erfindung, und
- Fig. 5: in einer schematischen Draufsicht ein Lagersystem mit einer Lagerbehälter-Hebevorrichtung mit beidseitig ausgebildeten Pufferplätzen und einem zusätzlichen Regallager gemäß einem weiteren Ausführungsbeispiel der Erfindung.

Grundsätzlich sei angemerkt, dass im Rahmen der nachfolgenden Figurenbeschreibung gleiche Komponenten bzw. gleiche Bauteile in sämtlichen Figuren mit einheitlichen Bezugszeichen versehen sind.

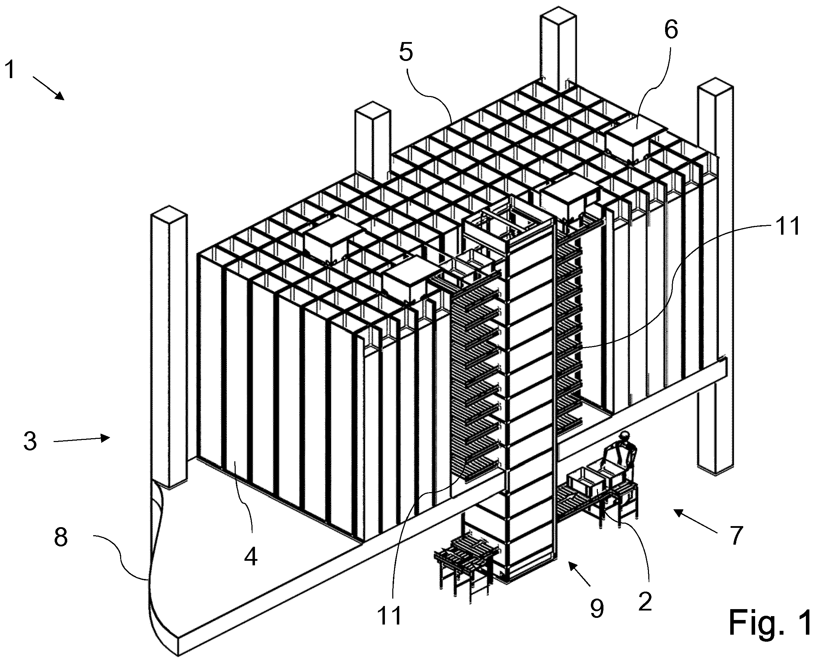

Fig. 1 zeigt - schematisch - in einer perspektivischen Schnittdarstellung ein Lagersystem 1 zum Lagern von Lagerbehältern 2.

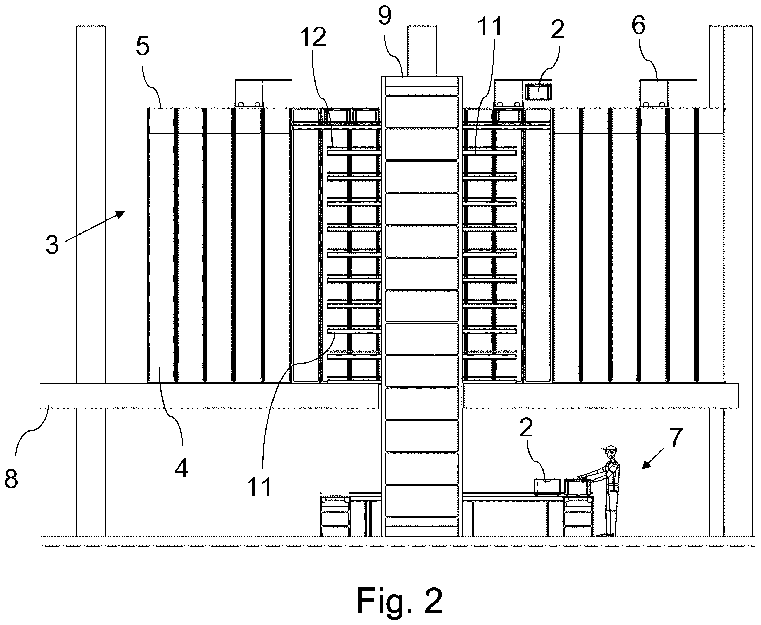

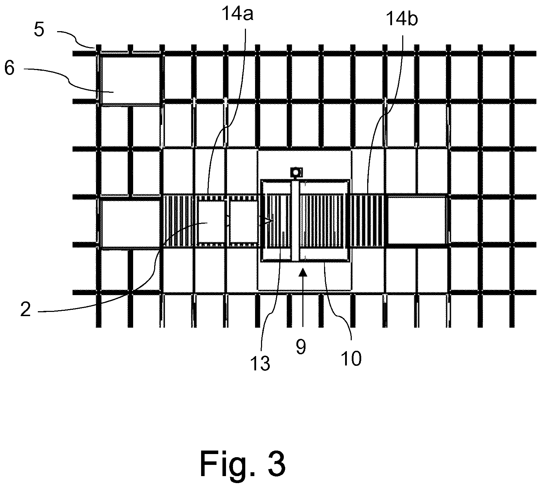

Das Lagersystem 1 gemäß Fig. 1 ist in Fig. 2 in einer geschnittenen Seitenansicht und in Fig. 3 in einer Draufsicht dargestellt. Das Lagersystem 1 ist dreidimensional organisiert und umfasst als Behälter-Lagerstruktur 3 ein in Leichtbauweise gefertigtes Gerüst, welches eine Vielzahl von Lagersäulen 4 definiert. Innerhalb dieser Lagersäulen 4 befinden sich jeweils vertikal übereinander angeordnete Lagerplätze, in denen die Lagerbehälter 2 bis zu einer bestimmten Höhe übereinandergestapelt werden können.

Den oberen Abschluss der Behälter-Lagerstruktur 3 bildet eine als Schienenraster ausgeführte Gitterstruktur 5, auf der eine Anzahl von Transportrobotern 6 zur Bedienung des Lagersystems 1 operieren. Die Gitterstruktur 5 definiert eine Vielzahl von mit den Lagersäulen 4 korrespondierenden Gitterzellen. Die Transportroboter 6, die sich horizontal auf der Gitterstruktur 5 bewegen können, umfassen jeweils einen (in den Fig. 1 und 2 nicht zu erkennenden) Lift zum Aufnehmen, Transportieren und Platzieren von Lagerbehältern 2, die in der Behälter-Lagerstruktur 3 gelagert sind. Das Lagersystem 1 umfasst des Weiteren Arbeitsplätze 7, wobei diese als Beladestation und/oder als Kommissionierstation ausgebildet sein können. Wenngleich Lagersysteme der hier in Rede stehenden Art im praktischen Betrieb eine Vielzahl solcher Arbeitsplätze aufweisen, ist aus Gründen der Übersichtlichkeit in den Fig. 1 und 2 nur ein einzelner Arbeitsplatz 7 dargestellt. Über eine (nicht dargestellte) Förderstrecke werden einzulagernden Waren zu den jeweiligen Arbeitsplätzen 7 hin transportiert bzw. auszulagernde oder kommissionierte Waren abtransportiert.

Eine Lagerbehälter-Hebevorrichtung 9, die als Schnittstelle zwischen den Arbeitsplätzen 7 und einer oberen Ebene der Behälter-Lagerstruktur 3 fungiert, ist in das Innere der Behälter-Lagerstrukturen 3 integriert, so dass diese allseitig von Lagersäulen 4 umgeben ist. Der Schnitt in den Fig. 1 und 2 ist dabei so gewählt, dass sowohl die Lagerbehälter-Hebevorrichtung 9 als auch der Arbeitsplatz 7, welcher unterhalb einer die Behälter-Lagerstruktur 3 tragenden Zwischendecke 8 eingerichtet ist, gut zu erkennen sind.

Alternativ zu einer Positionierung der Lagerbehälter-Hebevorrichtung 9 in einem inneren Bereich der Behälter-Lagerstrukturen 3 könnte die Lagerbehälter-Hebevorrichtung 9 auch nur so weit in die Behälter-Lagerstruktur 3 integriert werden, dass eine Außenseite der Lagerbehälter-Hebevorrichtung 9 mit der jeweiligen Außenseite der Behälter-Lagerstruktur 3 abschließt. Ebenfalls realisierbar ist eine Ausgestaltung, bei der die Lagerbehälter-Hebevorrichtung 9 seitlich an eine Außenseite der Behälter-Lagerstruktur 3 anbaut. Je nach baulichen Gegebenheiten kann die Lagerbehälter-Hebevorrichtung 9 auch beabstandet zu der Behälter-Lagerstruktur 3 angeordnet sein, so dass innerhalb der bestehenden Behälter-Lagerstruktur 3 überhaupt keine Lagerplätze verloren gehen. Der Abstand zu der Behälter-Lagerstruktur 3 kann dabei über entsprechende Fördereinrichtungen überbrückt werden. Des Weiteren ist es möglich, mehrere separate Lagerbehälter-Hebevorrichtung 9 bereitzustellen.

Unabhängig von der konkreten Positionierung umfasst die Lagerbehälter-Hebevorrichtung 9 eine (in den Fig. 1 und 2 nicht zu erkennende) Hub-Plattform 10 und ist eingerichtet, zwischen unterschiedlichen Ebenen des Lagersystems 1 zu vermitteln, indem sie Lagerbehälter 2 in vertikaler Richtung von einer Ebene zu einer anderen Ebene befördert, insbesondere von einem Arbeitsplatz 7 zu einer oberen Ebene der Behälter-Lagerstruktur 3 und umgekehrt. Die genaue Funktionsweise der Lagerbehälter-Hebevorrichtung 9 wird weiter unten im Detail beschrieben.

Gemäß dem in den Fig. 1 bis 3 dargestellten Ausführungsbeispiel der Erfindung ist die Behälter-Lagerstruktur 3 auf einer Plattform bzw. Zwischendecke 8 montiert, wobei ein Arbeitsplatz 7 in einem Bereich unterhalb der Zwischendecke 8 eingerichtet ist. Für die Lagerbehälter-Hebevorrichtung 9, die, wie bereits mehrfach erwähnt, Lagerbehälter 2 in vertikaler Richtung, insbesondere zwischen dem Arbeitsplatz 7 und einer oberen bzw. der obersten Ebene der Behälter-Lagerstruktur 3, befördert, ist ein entsprechender Durchgang in der Zwischendecke 8 ausgebildet.

Wie in der Draufsicht gemäß Fig. 3 zu sehen ist, umfasst die Lagerbehälter-Hebevorrichtung 9 eine heb- und senkbare Hub-Plattform 10 zur Aufnahme von Lagerbehältern 2 für einen Vertikaltransport. Die Hub-Plattform 10 umfasst eine Fördereinrichtung 13, über die in einer Halteposition der Lagerbehälter-Hebevorrichtung 9 zu befördernde Lagerbehälter 2 aufgenommen bzw. beförderte Lagerbehälter 2 abgegeben werden können. Entsprechend sind auf der in Fig. 3 zu erkennenden oberen Übergabe-Ebene der Behälter-Lagerstruktur 3 zwei Förderstrecken 14a, 14b vorgesehen, die jeweils auf gegenüberliegenden Seiten der Lagerbehälter-Hebevorrichtung 9 angeordnet sind. In dieser Anordnung wird die Lagerbehälter-Hebevorrichtung 9 derart gesteuert, dass die Fördereinrichtung 13 bei Erreichen der oberen Übergabe-Ebene die jeweils transportierten Lagerbehälter 2 in eine Richtung ausschleust (in der Darstellung gemäß Fig. 3 bspw. nach rechts auf die Förderstrecke 14b), während die Fördereinrichtung 13 von der jeweils anderen Richtung (d.h. bspw. von der Förderstrecke 14a von links) Lagerbehälter 2 aufnimmt, die zu dem Arbeitsplatz 7 nach unten befördert werden müssen.

Bei den hier in Rede stehenden Lagersystemen besteht häufig die Anforderung, dass Lagerbehälter 2 in einer bestimmten Reihenfolge/Sequenz an einem Arbeitsplatz 7 ankommen müssen. Dies kann sowohl im Rahmen einer "harten Sequenz" als auch im Rahmen einer "weichen Sequenz" der Fall sein. Bei einer harten Sequenz müssen alle Artikel bzw. Lagerbehälter 2 eines Kommissionier- /Produktionsauftrags in einer exakt vorbestimmten Reihenfolge am Arbeitsplatz 7 ankommen, um keinen Lagerbehälter 2 am Arbeitsplatz zwischenlagern zu müssen. Im Gegenzug müssen bei einer weichen Sequenz die zu einem bestimmten Auftrag gehörenden Lagerbehälter 2 nicht in einer bestimmten Reihenfolge am Arbeitsplatz 7 ankommen, jedoch müssen alle zu dem jeweiligen Auftrag gehörenden Lagerbehälter 2 nacheinander ankommen, ohne dass die Sequenz von Lagerbehältern 2 eines anderen Auftrags unterbrochen wird, z.B. um ein Paket ohne Unterbrechung durchgängig packen zu können.

Problematisch ist insoweit, dass das Lagersystem 1 enorm an Leistung einbüßt, wenn Sequenzen der beschriebenen Art ohne zwischengeschaltete Elemente direkt aus dem Lager erstellt werden müssen. Ein Hauptgrund für die Leistungseinbußen ist dabei, dass sich die Wartezeiten der Transportroboter 6 erhöhen, da sie sich gegenseitig blockieren und aufeinander warten müssen und dementsprechend nicht optimal genutzt werden können.

Zur Umgehung dieses Problems sind in erfindungsgemäßer Weise eine oder mehrere Ebenen der Behälter-Lagerstruktur 3 als Puffer-Ebenen mit jeweils einem oder mehreren an die Lagerbehälter-Hebevorrichtung 9 ankoppelnden Pufferplätzen 11 zur Zwischenlagerung von Lagerbehälter 2 ausgebildet, wie insbesondere in den Fig. 1 und 2 zu erkennen ist. Mit anderen Worten sind die Pufferplätze 11 an die Lagerbehälter-Hebevorrichtung 9 angrenzend ausgebildet, so dass eine Übergabe von Lagerbehältern 2 von der Hub-Plattform 10 der Lagerbehälter-Hebevorrichtung 9 auf die Pufferplätze 11 und umgekehrt ermöglicht ist. Die Übergabe erfolgt in dem dargestellten nicht erfindungsgemäßen Ausführungsbeispiel mittels einer auf den jeweiligen Pufferplätzen 11 angeordneten Fördereinrichtung mit vorzugsweise umkehrbar bzw. reversibel einstellbarer Förderrichtung, bspw. in Gestalt einer angetriebenen Rollenbahn 12.

Die Bereitstellung von Pufferplätzen 11 direkt an der Lagerbehälter-Hebevorrichtung 9 ermöglicht es, dass die Lagerbehälter-Hebevorrichtung 9 durch geeignete Zwischenlagerung von Lagerbehältern 2 auf den Pufferplätzen 11 die Funktion der Sequenzierung übernimmt. Mit anderen Worten wird die geforderte Sequenzierung durch die Lagerbehälter-Hebevorrichtung 9 mittels entsprechender Zwischenlagerung realisiert. Durch die damit geschaffene Entkopplung der Sequenzierung von den Transportrobotern 6 können diese unabhängig von der jeweils konkret geforderten Sequenz und damit flexibler und schneller arbeiten.

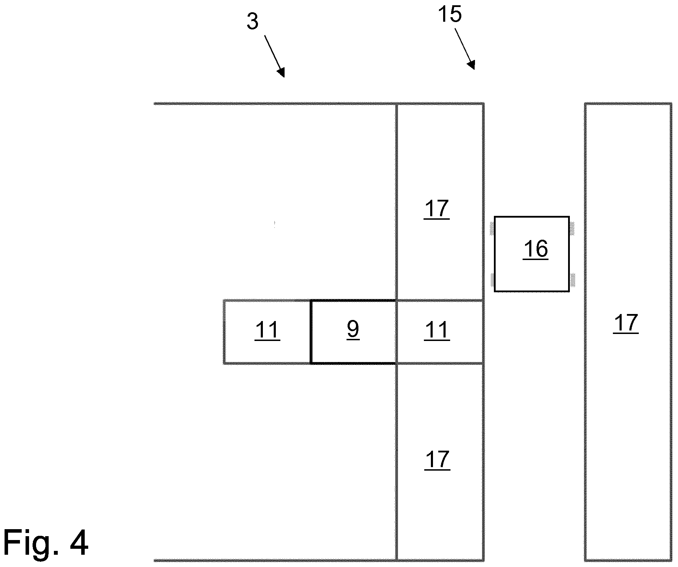

In dem dargestellten Ausführungsbeispiel sind alle Lagerebenen zwischen der oberen Übergabe-Ebene und der Arbeitsplatz-Ebene, d.h. insgesamt zehn Ebenen, als Puffer-Ebenen mit Pufferplätzen 11 ausgeführt, wobei Pufferplätze 11 jeweils auf zwei einander gegenüberliegenden Seiten der Lagerbehälter-Hebevorrichtung 9 angeordnet sind. Zudem sind die Pufferplätze 11 jeweils doppelttief ausgeführt, sodass pro Pufferplatz 11 jeweils zwei Lagerbehälter 2 zwischengelagert werden können. Insgesamt bietet die Vorrichtung somit eine Pufferkapazität für 10 x 2 x 2 = 40 Lagerbehälter 2. Es sei angemerkt, dass hiervon abweichende Varianten, bspw. mit einfach- oder dreifachtiefen Pufferplätzen 11 und/oder mit nur einseitig der Lagerbehälter-Hebevorrichtung 9 ausgebildeten Pufferplätzen 11, in Abhängigkeit von den jeweiligen Anforderungen und Gegebenheiten realisiert werden können. Fig. 4 zeigt in einer schematischen Draufsicht ein Lagersystem mit einer Lagerbehälter-Hebevorrichtung 9 mit beidseitig in einer Mehrzahl von Puffer-Ebenen ausgebildeten Pufferplätzen 11 und einem zusätzlichen Regallager 15 gemäß einem Ausführungsbeispiel der Erfindung. Bei dem Regallager 15 handelt es sich um ein Regallager 15, welches mit Hilfe von einzelnen, mit Lastaufnahmemitteln ausgestatteten Transporteinheiten, sog. Shuttles 16, bedient wird. Die Shuttles 16 können dabei entweder als OLS-Systeme (One-Level-Shuttles) oder als MLS-System (Multi-Level-Shuttles) ausgeführt sein.

Die auf einer Seite der Lagerbehälter-Hebevorrichtung 9 angeordneten Pufferplätze 11 (in Fig. 4 auf der rechten Seite) sind einerseits zur Übernahme von Lagerbehältern 2 von der Lagerbehälter-Hebevorrichtung 9 und andererseits zur Übergabe von Lagerbehältern 2 an die Shuttles 16 und/oder zur Übernahme von Lagerbehältern von den Shuttles 16 ausgeführt. Mithin fungieren diese Pufferplätze 11 als Schnittstellen bzw. Übergabestellen zwischen der Behälter-Lagerstruktur 3 und dem Regallager 15 und ermöglichen somit eine Erweiterung der Pufferkapazität durch das Regallager 15. Mit anderen Worten kann eine Zwischenspeicherung von Lagerbehältern 2 nicht nur auf den an die Lagerbehälter-Hebevorrichtung 9 ankoppelnden Pufferplätzen 11 erfolgen, sondern kann auf das gesamte Regallager 15 erweitert werden. Die Shuttles 16 können dabei Lagerbehälter 2 von den jeweiligen Pufferplätzen 11 übernehmen und diese in dem Regallager 15 zwischenspeichern. In vorteilhafter Weise können bei der beschriebenen Ausführungsform Lagerbehälter 2, in denen häufig angefragte Artikel gelagert sind, bereits in dem Regallager 15 vorgehalten werden. Eine Versorgung der (in Fig. 4 nicht dargestellten) Arbeitsplätze 7 erfolgt über die Shuttles 16.

Im Hinblick auf eine platzsparende Ausgestaltung sind in der in Fig. 4 dargestellten Ausführungsform die an die Lagerbehälter-Hebevorrichtung 9 ankoppelnden Pufferplätze 11 in eine Regalreihe 17 des Regallagers 15 integriert. Gemäß einer weiteren Ausführungsform kann vorgesehen sein, dass nicht nur die Pufferplätze 11, wie in Fig. 4 gezeigt, sondern zusätzlich auch die Lagerbehälter-Hebevorrichtung 9, in eine Regalreihe 17 des Regallagers 15 integriert ist, ggf. zusammen mit beidseitig anschließenden Pufferplätzen 11.

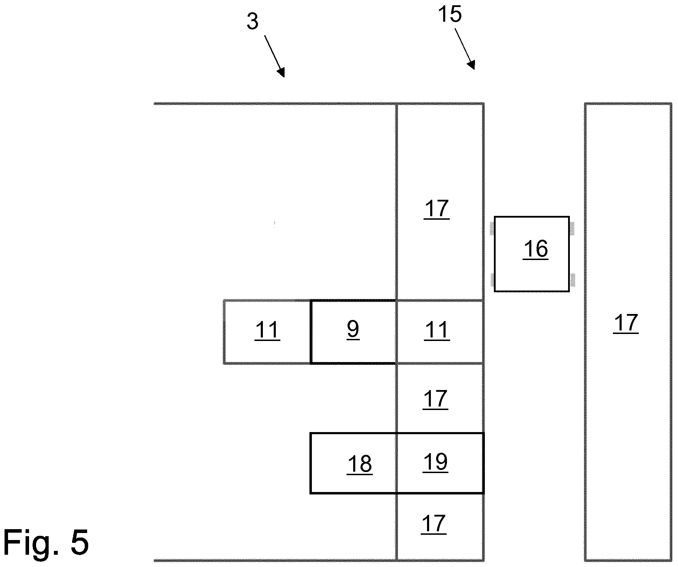

Fig. 5 zeigt in einer schematischen Draufsicht ein ähnliches Lagersystem wie Fig. 4, wobei in Ergänzung zu der Ausführungsform gemäß Fig. 4 eine weitere Lagerbehälter-Hebevorrichtung 18 mit ankoppelnden Pufferplätzen 19 vorgesehen ist. Dabei kann vorgesehen sein, dass, wie im Zusammenhang mit Fig. 4 beschrieben, über die Pufferplätze 11 dem Regallager 15 neue Lagerbehälter 2 aus der Behälter-Lagerstruktur 3 zugeführt werden, während über die zusätzliche Lagerbehälter-Hebevorrichtung 18 mit ankoppelnden Pufferplätzen 19 Lagerbehälter 2 abgeführt bzw. den jeweiligen Arbeitsplätzen zugeführt werden. Auf diese Weise können reversierbare Pufferplätze, die grundsätzlich störanfällig sind und die Leistung mindern, innerhalb des Regallagers 15 vermieden werden.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken. Vielmehr wird der Schutzbereich der Erfindung durch die Ansprüche bestimmt.

### Bezugszeichenliste

- 1: Lagersystem
- 2: Lagerbehälter
- 3: Behälter-Lagerstruktur
- 4: Lagersäule
- 5: Gitterstruktur
- 6: Transportroboter
- 7: Arbeitsplatz
- 8: Zwischendecke
- 9: Lagerbehälter-Hebevorrichtung
- 10: Hub-Plattform
- 11: Pufferplatz
- 12: Rollenbahn
- 13: Fördereinrichtung
- 14a: Förderstrecke
- 14b: Förderstrecke
- 15: Regallager
- 16: Shuttle
- 17: Regalreihe
- 18: Lagerbehälter-Hebevorrichtung
- 19: Pufferplatz

## Patentansprüche

1. Lagersystem zum Lagern von Behältern, umfassend:
eine Gitterstruktur (5) mit einer Vielzahl von Gitterzellen, wobei jede Gitterzelle eine Lagersäule (4) einer unterhalb der Gitterstruktur (5) angeordneten Behälter-Lagerstruktur (3) definiert, wobei die Lagersäulen (4) eingerichtet sind, jeweils einen vertikalen Stapel von Lagerbehältern (2) aufzunehmen,
mindestens einen zur Fortbewegung auf der Gitterstruktur (5) ausgebildeten Transportroboter (6) zur Handhabung der Lagerbehälter (2), wobei der Transportroboter (6) Mittel zum Aufnehmen, Transportieren und Absetzen von in der Behälter-Lagerstruktur (3) gelagerten Lagerbehältern (2) umfasst, sowie
mindestens eine Lagerbehälter-Hebevorrichtung (9) mit einer heb- und senkbaren Hub-Plattform (10) zum vertikalen Befördern von Lagerbehältern (2),
wobei eine oder mehrere Ebenen der Behälter-Lagerstruktur (3) als Puffer-Ebenen mit jeweils einem oder mehreren an die Lagerbehälter-Hebevorrichtung (9) ankoppelnden Pufferplätzen (11) zur Zwischenlagerung von Lagerbehälter (2) ausgebildet sind, **dadurch gekennzeichnet, dass** die heb- und senkbare Hub-Plattform (10) zur Übergabe von Lagerbehältern (2) an die Pufferplätze (11) sowie zur Übernahme von Lagerbehältern (2) von den Pufferplätzen (11) eine Greifvorrichtung umfasst.

2. Lagersystem nach Anspruch 1, **dadurch gekennzeichnet, dass** die Pufferplätze (11) auf zwei einander gegenüberliegenden Seiten der Lagerbehälter-Hebevorrichtung (9) angeordnet sind.

3. Lagersystem nach Anspruch 1 oder 2, **dadurch gekennzeichnet, dass** die Pufferplätze (11) auf der einen Seite der Lagerbehälter-Hebevorrichtung (9) zur Zwischenlagerung von in die Behälter-Lagerstruktur (3) einzulagernden Lagerbehältern (2) und die Pufferplätze auf der anderen Seite der Lagerbehälter-Hebevorrichtung (9) zur Zwischenlagerung von aus der Behälter-Lagerstruktur (3) auszulagernden Lagerbehältern (2) ausgeführt sind.

4. Lagersystem nach Anspruch 1, **dadurch gekennzeichnet, dass** die Pufferplätze (11) nur auf einer Seite der Lagerbehälter-Hebevorrichtung (9) angeordnet sind.

5. Lagersystem nach einem der Ansprüche 1 bis 4, **dadurch gekennzeichnet, dass** die Pufferplätze (11) von Puffer-Ebene zu Puffer-Ebene alternierend entweder zur Zwischenlagerung von in die Behälter-Lagerstruktur (3) einzulagernden Lagerbehältern (2) oder zur Zwischenlagerung von aus der Behälter-Lagerstruktur (3) auszulagernden Lagerbehältern (2) ausgeführt sind.

6. Lagersystem nach einem der Ansprüche 1 bis 5, **dadurch gekennzeichnet, dass** eine oder mehrere Puffer-Ebenen einen Pufferplatz (11) umfassen, der zur Übergabe von Lagerbehältern (2) an einen Transportroboter (6) und/oder zur Übernahme von Lagerbehältern (2) von einem Transportroboter (6) einen mit einer Gitterzelle der Gitterstruktur (5) korrespondierenden, von der Gitterstruktur (5) aus frei zugänglichen Pufferbereich aufweist.

7. Lagersystem nach einem der Ansprüche 1 bis 6, **gekennzeichnet durch**
mindestens einer Arbeitsplatz-Ebene mit einem als Beladestation und/oder als Kommissionierstation ausgeführten Arbeitsplatz (7), und
mindestens einer Übergabe-Ebene zur Übergabe von Lagerbehältern (2) von der Behälter-Lagerstruktur (3) an die Lagerbehälter-Hebevorrichtung (9) sowie von der Lagerbehälter-Hebevorrichtung (9) an die Behälter-Lagerstruktur (3),
wobei die Lagerbehälter-Hebevorrichtung (9) die Arbeitsplatz-Ebene mit der Übergabeplatz-Ebene verbindet.

8. Lagersystem nach einem der Ansprüche 1 bis 7, **dadurch gekennzeichnet, dass** die Lagerbehälter-Hebevorrichtung (9) und die Pufferplätze (11) als bauliche Einheit ausgeführt sind.

9. Lagersystem nach einem der Ansprüche 1 bis 8, **dadurch gekennzeichnet, dass** eine Lagerbehälter-Hebevorrichtung (9) an einer Außenseite der Behälter-Lagerstruktur (3) und/oder im Inneren der Behälter-Lagerstruktur (3) angeordnet ist.

10. Lagersystem nach einem der Ansprüche 1 bis 9, weiterhin umfassend ein mittels einem oder mehreren Shuttles (16) bedienbares Regallager (15), wobei die Pufferplätze (11) zur Übergabe von Lagerbehältern (2) an die Shuttles (16) und/oder zur Übernahme von Lagerbehältern (2) von den Shuttles (16) ausgeführt sind.

11. Lagersystem nach Anspruch 10, **dadurch gekennzeichnet, dass** die an die Lagerbehälter-Hebevorrichtung (9) ankoppelnden Pufferplätze (11) in eine Regalreihe des Regallagers (15) integriert sind.

## Claims

1. Storage system for storing containers, comprising:
a grid structure (5) having a large number of grid cells, wherein each grid cell defines a storage column (4) of a container storage structure (3) which is arranged below the grid structure (5), wherein the storage columns (4) are configured to each receive a vertical stack of storage containers (2),
at least one transport robot (6) which is constructed for movement on the grid structure (5) for handling the storage containers (2), wherein the transport robot (6) comprises means for receiving, transporting and depositing storage containers (2) stored in the container storage structure (3), and
at least one storage container lifting apparatus (9) having a lifting platform (10) which can be raised and lowered for vertically conveying storage containers (2),
wherein one or more levels of the container storage structure (3) is/are in the form of buffer levels each having one or more buffer locations (11) which are coupled to the storage container lifting apparatus (9) for temporary storage of storage containers (2), **characterised in that** the lifting platform (10) which can be raised and lowered for transferring storage containers (2) to the buffer locations (11) and for receiving storage containers (2) from the buffer locations comprises a gripping apparatus.

2. Storage system according to claim 1, **characterised in that** the buffer locations (11) are arranged at two mutually opposing sides of the storage container lifting apparatus (9).

3. Storage system according to claim 1 or 2, **characterised in that** the buffer locations (11) at one side of the storage container lifting apparatus (9) are configured for temporarily storing storage containers (2) which are intended to be stored in the container storage structure (3) and the buffer locations at the other side of the storage container lifting apparatus (9) are configured for temporarily storing storage containers (2) which are intended be removed from the container storage structure (3).

4. Storage structure according to claim 1, **characterised in that** the buffer locations (11) are arranged only at one side of the storage container lifting apparatus (9).

5. Storage system according to any one of claims 1 to 4, **characterised in that** the buffer locations (11) are configured in an alternating manner from buffer level to buffer level either for temporary storage of storage containers (2) which are intended to be stored in the container storage structure (3) or for temporary storage of storage containers (2) which are intended to be removed from the container storage structure (3).

6. Storage system according to any one of claims 1 to 5, **characterised in that** one or more buffer levels comprise a buffer location (11) which, in order to transfer storage containers (2) to a transport robot (6) and in order to receive storage containers (2) from a transport robot (6) has a buffer region which corresponds to a grid cell of the grid structure (5) and which is freely accessible from the grid structure (5).

7. Storage system according to any one of claims 1 to 6, **characterised by**
at least one working location level having a working location (7) which is in the form of a loading station and/or a picking station, and
at least one transfer level for transferring storage containers (2) from the container storage structure (3) to the storage container lifting apparatus (9) and from the storage container lifting apparatus (9) to the container storage structure (3),
wherein the storage container lifting apparatus (9) connects the working location level to the transfer location level.

8. Storage system according to any one of claims 1 to 7, **characterised in that** the storage container lifting apparatus (9) and the buffer locations (11) are in the form of a structural unit.

9. Storage system according to any one of claims 1 to 8, **characterised in that** a storage container lifting apparatus (9) is arranged at an outer side of the container storage structure (3) and/or inside the container storage structure (3) .

10. Storage system according to any one of claims 1 to 9, further comprising a shelf store (15) which can be operated by means of one or more shuttles (16), wherein the buffer locations (11) are configured to transfer storage containers (2) to the shuttles (16) and/or to receive storage containers (2) from the shuttles (16).

11. Storage system according to claim 10, **characterised in that** the buffer locations (11) which are coupled to the storage container lifting apparatus (9) are integrated in a shelf row of the shelf store (15).

## Revendications

1. Système de stockage pour le stockage de récipients, comprenant :
une structure de grille (5) avec une pluralité de cellules de grille, dans lequel chaque cellule de grille définit une colonne de stockage (4) d'une structure de stockage de récipients (3) disposée en dessous de la structure de grille (5), dans lequel les colonnes de stockage (4) sont conçues pour loger chacune un empilement vertical de récipients de stockage (2),
au moins un robot de transport (6), conçu pour se déplacer sur la structure de grille (5), pour la manipulation des récipients de stockage (2), dans lequel le robot de transport (6) comprend des moyens pour le logement, le transport et le dépôt des récipients de stockage (2) logés dans la structure de stockage de récipients (3), ainsi que
au moins un dispositif de levage de récipients de stockage (9) avec une plateforme de levage (10) pouvant être levée et abaissée, pour le convoyage vertical de récipients de stockage (2),
dans lequel un ou plusieurs niveaux de la structure de stockage de récipients (3) sont conçus comme des niveaux tampons avec chacun un ou plusieurs emplacements tampons (11) se couplant au dispositif de levage de récipients de stockage (9), pour l'entreposage de récipients de stockage (2), **caractérisé en ce que** la plateforme de levage (10) pouvant être levée et abaissée comprend un dispositif de préhension pour le transfert des récipients de stockage (2) vers les emplacements tampons (11) ainsi que pour la prise en charge des récipients de stockage (2) à partir des emplacements tampons (11).

2. Système de stockage selon la revendication 1, **caractérisé en ce que** les emplacements de stockage (11) sont disposés sur deux côtés opposés du dispositif de levage de récipients de stockage (9).

3. Système de stockage selon la revendication 1 ou 2, **caractérisé en ce que** les emplacements de stockage (11) sur un côté du dispositif de levage de récipients de stockage (9) sont conçus pour l'entreposage des récipients de stockage (2) à stocker dans la structure de stockage de récipients (3) et les emplacements de stockage sur l'autre côté du dispositif de levage de récipients de stockage (9) sont conçus pour l'entreposage des récipients de stockage (2) à déstocker hors de la structure de stockage de récipients (3).

4. Système de stockage selon la revendication 1, **caractérisé en ce que** les emplacements de stockage (11) sont disposés uniquement sur un côté du dispositif de levage de récipients de stockage (9).

5. Système de stockage selon l'une des revendications 1 à 4, **caractérisé en ce que** les emplacements de stockage (11) sont conçus, de manière alternée d'un niveau tampon à un autre, soit pour l'entreposage des récipients de stockage (2) à stocker dans la structure de stockage de récipients (3) soit pour l'entreposage des récipients de stockage (2) à déstocker hors de la structure de stockage de récipients (3).

6. Système de stockage selon l'une des revendications 1 à 5, **caractérisé en ce qu'**un ou plusieurs niveaux tampons comprennent un emplacement tampon (11) qui comprend, pour le transfert des récipients de stockage (2) vers un robot de transport (6) et/ou pour la prise en charge des récipients de stockage (2) par un robot de transport (6), une zone tampon correspondant à une cellule de grille de la structure de grille (5) et librement accessible à partir de la structure de grille (5).

7. Système de stockage selon l'une des revendications 1 à 6, **caractérisé par** au moins un niveau d'emplacement de travail avec un emplacement de travail (7) conçu comme une station de chargement et/ou comme une station de préparation de commande et
au moins un niveau de transfert pour le transfert des récipients de stockage (2) de la structure de stockage de récipients (3) vers le dispositif de levage de récipients de stockage (9) ainsi que du dispositif de levage de récipients de stockage (9) vers la structure de stockage de récipients (3),
dans lequel le dispositif de levage de récipients de stockage (9) relie le niveau d'emplacement de travail avec le niveau d'emplacement de transfert.

8. Système de stockage selon l'une des revendications 1 à 7, **caractérisé en ce que** le dispositif de levage de récipients de stockage (9) et les emplacements tampons (11) sont conçus comme une seule unité.

9. Système de stockage selon l'une des revendications 1 à 8, **caractérisé en ce qu'**un dispositif de levage de récipients de stockage (9) est disposé sur un côté externe de la structure de stockage de récipients (3) et/ou à l'intérieur de la structure de stockage de récipients (3).

10. Système de stockage selon l'une des revendications 1 à 9, comprenant en outre un stockage à rayonnages (15) pouvant être desservi au moyen d'une ou plusieurs navettes (16), dans lequel les emplacements tampons (11) sont conçus pour le transfert des récipients de stockage (2) vers les navettes (16) et/ou pour la prise en charge des récipients de stockage (2) par les navettes (16).

11. Système de stockage selon la revendication 10, **caractérisé en ce que** les emplacements de stockage (11) se couplant au dispositif de levage de récipients de stockage (9) sont intégrés dans une rangée de rayonnages du stockage à rayonnages (15).
